# EUROPEAN PATENT APPLICATION

(11) **EP 0 523 018 A1**
(43) Date of publication of application: **13.01.1993**
(21) Application number: 92830365.0
(22) Date of filing: 09.07.1992
(51) Int. Cl.: B60B 3/14

(54) **Light alloy wheel for motor vehicles, having clamping holes shaped as semicircle-like slots**

(30) Priority: 12.07.1991 IT MI910648 U
(71) Applicant: FONDMETAL S.p.A., Palosco (Bergamo) (IT)
(72) Inventor: Corioni, Giovanni, Palosco (Bergamo) (IT)
(74) Representative: Pizzoli, Pasquale Vincenzo

(57) **Abstract**

Metal rim for motor vehicle wheels, in light alloy in particular, comprising at least one series of slot-like shaped clamping holes 2, equidistant from one another and from the wheel centre 3. Each of said slots 2 consists of two frontally opposed semicircles 4,6 whose respective centres 5,7 are at different distances with respect to the rim centre 3, with bending radiuses even different from each other. Said holes 2 may form two distinct series of reciprocally alternate slots 2,2′.

## Description

The present invention relates to motor vehicle wheels and more particularly to a light alloy wheel provided with slot-shaped clamping holes.

It is known that the motor vehicle rims, commonly called wheels as well, are provided with a plurality of round holes for the passage of the threaded pins by which the rims are bolted onto the real motor vehicle wheels. Such holes are generally four or five and are arranged equidistant from one another and from the centre of a large central opening which is for fixing the rim in the centre of the wheel hub. The number of the holes may vary according to the motor vehicle type, but also their distance from the central opening varies from vehicle to vehicle. In order to make the rims adaptable to several kinds of vehicles, there have been manufactured rims whith a double amount of holes, arranged the one alternate to the other around the central opening at two different distances from the centre of this opening, in such a way as to obtain two series of clamping holes distinguished each by a different distance from the central opening.

It is not possible, however, to increase at will the amount of the clamping holes, both not to prejudice the mechanical resistance of the wheel, and because the available area is topographically limited.

It is an object of the present invention to allow the rim to fit a greater number of motor vehicle types without having to increase the amount of the hole series characterized by different centre distances. Such object is achieved by replacing the common round holes used to fasten the rim to the wheel by holes of a special shape which will be hereinafter called semicircle-like slots. Thanks to such slots it is possible to increase the adaptability of the rim because each series of slots corresponds to two series of round holes having two different centre distances.

The advantages as well as the characteristics of the rims according to the present invention will appear evident to those skilled in the art from the following detailed description of one embodiment thereof with reference to the attached drawings wherein:
- FIGURE 1 is a partial plan view of the central area of a rim provided with a series of clamping slots according to the present invention; and
- FIGURE 2 shows a view analogous to that of Fig. 1, with two series of clamping slots according to the present invention.

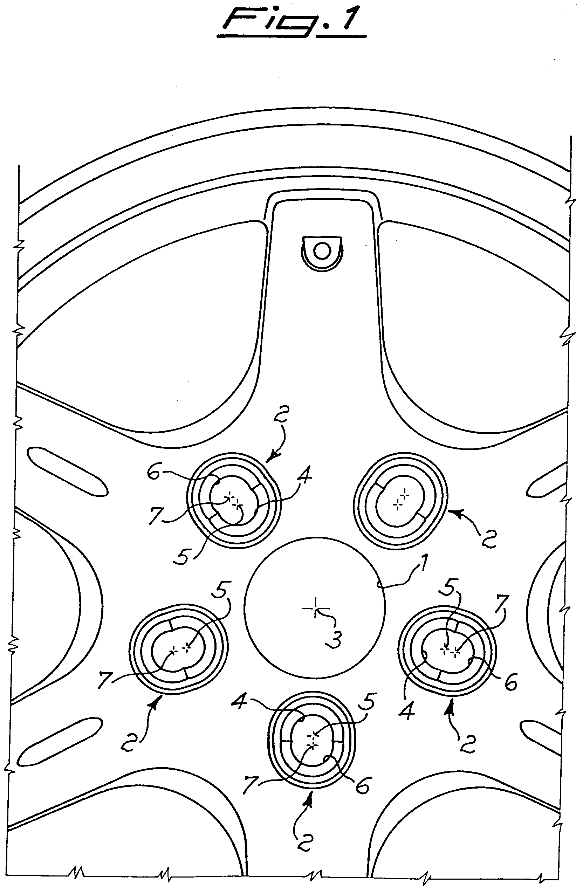

With reference to Fig. 1, it can be seen that in the rim according to the present invention a series of five slots 2 equidistant from one another and from the centre 3 of the central opening 1 are arranged around the central opening 1. As it can be seen in the figure, each slot is not round, but has an uneven shape resulting from setting face to face two semicircles whose centres are at a different distance with respect to the wheel centre. In fact each slot consists of a semicircle 4 having centre 5 and of a semicircle 6 having centre 7. Centre 5 is nearer than centre 7 to the wheel centre 3, whereby each slot corresponds to two round clamping holes distinguished by two different centre distances.

The two semicircles which form each slot may even have differing bending radiuses. This facilitates in certain cases the fastening operations of the rim onto the wheel, as in some kind of vehicles the diameter of the clamping stems and bolts varies too.

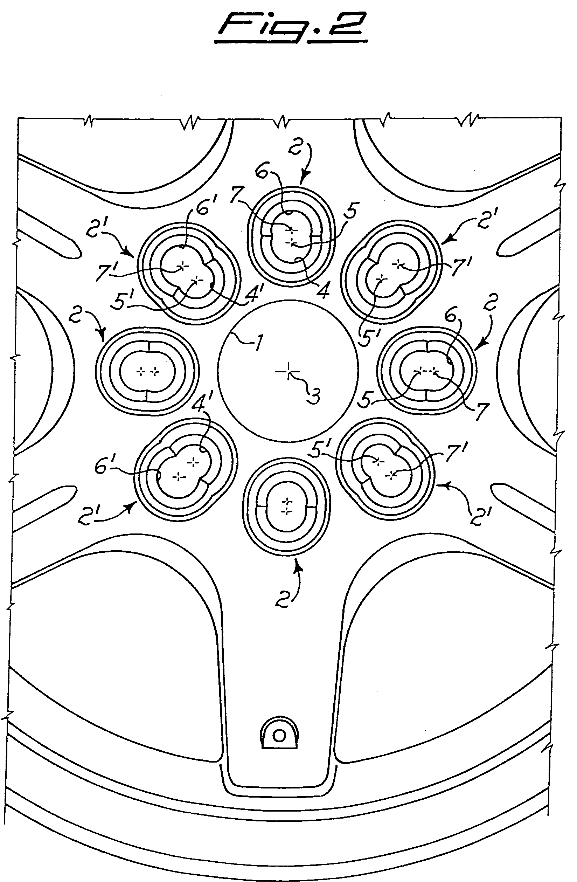

Referring to Fig. 2, it can be seen that in this embodiment there are two series of slots. A first series consists of the four slots 2 arranged at the four cardinal points with respect to the wheel centre 3. The other series consists of the four slots 2′, each interposed between two slots 2 of the first series.

Each series of slots 2′ is substantially analogous to the slots 2 of the first series, as they too consist of two frontally opposed semicircles 4′ and 6′ whose centres are 5′ and 7′, respectively.

In the embodiment illustrated in Fig. 2, since each series of slots is distinguished by two centre distances, the total amount of centre distances available on the wheel is even four. This means that the wheel according to such embodiment would correspond to a traditional kind of wheel provided with as many as four series of holes having different centre distances, which is practically impossible due to the actual limits mentioned above.

The wheel according to the present invention may be manufactured in any suitable material and in any requested size. Its increased adaptability to the different types of motor vehicles just depends on the particular slot-like shape of the clamping holes.

## Claims

1. Metal rim for motor vehicle wheels comprising at least one series of clamping holes equidistant from one another and from the centre of the wheel, characterized in that said clamping holes are shaped like a slot (2) consisting of two frontally opposed semicircles (4,6) whose respective centres (5, 7) are at different distances with respect to the centre (3) of the rim.

2. Rim according to claim 1, characterized in that the bending radiuses of the two opposite semicircles (4, 6) in the same slot (2) are different from each other.

3. Rim according to one or more of the preceding claims, characterized in that it is provided with two different series of slots (2, 2′), each slot of one series being interposed between two slots of the other series.

4. Rim for motor vehicle wheels substantially as hereinabove described and illustrated in the attached drawings.
